(19) Europäisches Patentamt
European Patent Office
Office européen des brevets

(11) **EP 3 074 578 B1**

(12) **FASCICULE DE BREVET EUROPEEN**

(45) Date de publication et mention
de la délivrance du brevet:
**14.11.2018 Bulletin 2018/46**

(21) Numéro de dépôt: **14815879.3**

(22) Date de dépôt: **26.11.2014**

(51) Int Cl.:
***E04D 3/30*** *(2006.01)*          ***H01L 31/048*** *(2014.01)*
***E04D 13/18*** *(2018.01)*

(86) Numéro de dépôt international:
**PCT/IB2014/002572**

(87) Numéro de publication internationale:
**WO 2015/079305 (04.06.2015 Gazette 2015/22)**

(54) **PANNEAU, ASSEMBLAGE DE PANNEAUX ET TOITURE ASSOCIÉE**

PLATTE, PLATTENANORDNUNG UND ZUGEHÖRIGE DACHSTRUKTUR

PANEL, PANEL ASSEMBLY, AND RELATED ROOFING

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **26.11.2013 PCT/IB2013/002644**

(43) Date de publication de la demande:
**05.10.2016 Bulletin 2016/40**

(73) Titulaire: **ArcelorMittal**
**1160 Luxembourg (LU)**

(72) Inventeurs:
• **CHABAS, Eric**
**F-77270 Villeparisis (FR)**
• **MASURE, David**
**F-92290 Chatenay Malabry (FR)**
• **NINFORGE, Dominique**
**B-5380 Forville (BE)**

(74) Mandataire: **Lavoix**
**2, place d'Estienne d'Orves**
**75441 Paris Cedex 09 (FR)**

(56) Documents cités:
**WO-A1-2006/125248      FR-A1- 2 951 529
GB-A- 2 195 680**

**Description**

La présente invention concerne un panneau, destiné à la réalisation d'enveloppes de bâtiments et plus particulièrement destiné à être assemblé pour permettre la construction de toitures de bâtiments porteuses de cellules photovoltaïques, sans toutefois y être limité.

Il est connu de réaliser les couvertures de toit avec des panneaux nervurés, par exemple en acier galvanisé prélaqué, dont les bords se chevauchent pour assurer l'étanchéité de la toiture.

Il est par ailleurs connu de rapporter sur la couverture des bâtiments des modules solaires, notamment photovoltaïques. Il peut s'agir notamment de modules sous forme de rubans souples collés sur la surface des creux d'onde du panneau nervuré. Dans le futur, il pourrait aussi s'agir de dispositifs photovoltaïques réalisés directement sur la surface des creux d'onde du panneau nervuré notamment par des procédés de dépôt sous vide. Une telle disposition présente cependant l'inconvénient de laisser une partie des cellules du soleil sur la couverture est faible. Cela réduit en conséquence les performances du dispositif photovoltaïque.

Il est connu du document FR2 951 529 des panneaux nervurés comprenant des parties saillantes supportant des modules photovoltaïques.

La présente invention a pour but de pallier aux problèmes précités en proposant un panneau nervuré dont le profil est configuré de sorte que les cellules photovoltaïques ne puissent se retrouver dans l'ombre des nervures dans la grande majorité des conditions d'éclairage.

A cet effet, l'invention a pour premier objet un panneau selon la revendication 1, ledit panneau présentant un profil de largeur L1 comprenant :

- un premier bord longitudinal comprenant successivement une première nervure longitudinale comprenant une partie centrale supérieure de hauteur H4 et de largeur L4 et deux ailes latérales prolongeant la partie centrale supérieure de part et d'autre de celle-ci et vers le dessous puis une première semelle de largeur L3 située dans un plan P, les deux ailes latérales formant un angle $\alpha$ avec le plan P,
- au moins une partie saillante dans le prolongement de la première semelle et comprenant un plateau supérieur de hauteur H7 et de largeur L7 et deux âmes latérales prolongeant le plateau supérieur de part et d'autre de celui-ci et vers le dessous en formant un angle $\beta$ avec le plan P,
- un second bord longitudinal dans le prolongement d'une des parties saillantes comprenant successivement une seconde semelle de largeur L9 située dans le plan P et une deuxième nervure longitudinale comprenant une partie centrale supérieure de hauteur H11 et de largeur L11 et deux ailes latérales prolongeant la partie centrale supérieure de part et d'autre de celle-ci et vers le dessous en formant un angle $\gamma$ avec le plan P, la première nervure longitudinale et la deuxième nervure longitudinale présentant des formes permettant leur recouvrement respectif,

les largeurs L1, L3, L4, L7, L9, L11, les hauteurs H4, H7, H11 et les angles $\alpha$, $\beta$, $\gamma$ respectant les relations suivantes :

$$L7 / L4 \geq 5$$

$$L7 / L11 \geq 5$$

$$H7 / H4 \geq 0{,}4$$

$$H7 / H4 \leq 0{,}6 \, \P$$

$$H7 \geq ((H4 \times (ab\text{-}be) - L3 \times abe) / (ae + ab))$$

$$H7 \geq ((H11 \times (cb\text{-}be) - L9 \times cbe) / (ce + cb))$$

Avec a = tan $\alpha$, b = tan $\beta$, c=tan $\gamma$ et e = tan 20°.

Le panneau selon l'invention peut également comprendre les caractéristiques optionnelles suivantes, prises isolément ou en combinaison :

- le rapport de la somme des largeurs L7 des parties saillantes sur la largeur L1 du panneau est supérieur ou égal à 0,5,
- les relations sont respectées avec e = tan 15°,
- les largeurs L4, L7, L11 et les hauteurs H4, H7, H11 respectent les relations suivantes :

$$L7 / L4 \geq 5$$

$$L7 / L11 \geq 5$$

$$H7 > H4$$

$$H7 > H11$$

- le panneau comprend deux parties saillantes,
- les deux parties saillantes sont séparés par deux semelles de longueur L13 situées dans le plan P encadrant une nervure centrale comprenant une partie centrale supérieure de hauteur H14 et deux ailes latérales prolongeant la partie centrale supérieure de part et d'autre de celle-ci et vers le dessous en formant un angle $\delta$ avec le plan P, la largeur L13, les hauteurs H7, H14 et les angles $\beta$ et $\delta$ respectant la relation suivante :

$$H7 \geq ((H14 \times (db\text{-}be) - L13 \times dbe) / (de + db))$$

Avec d= tan $\delta$,
- le ratio H7 / H14 est inférieur ou égal à 0,6,
- les hauteurs H7 et H14 respectent la relation suivante :

$$H7 > H14$$

- la partie centrale supérieure est plane,
- le plateau supérieur est cintré avec un rayon de courbure supérieur ou égal à 1,4 fois la largeur L7 du plateau supérieur,
- le plateau supérieur est concave,
- le plateau supérieur est convexe,
- l'âme latérale de la partie saillante comprend un raidisseur en forme de Z en partie supérieure d'âme,
- le plateau supérieur comprend une rainure longitudinale destinée à permettre le passage de câbles,
- le panneau comprend un embouti dans la surface du plateau supérieur destiné à loger un boîtier de raccordement électrique,
- les angles $\alpha$, $\beta$ et $\gamma$ sont aigus,
- les angles $\alpha$ et $\gamma$ sont aigus et l'angle $\beta$ est obtus,
- le plateau supérieur est recouvert de cellules photovoltaïques,
- les cellules photovoltaïques sont assemblées sous forme de rubans souples collés sur le plateau supérieur,
- les cellules photovoltaïques sont réalisées directement sur le plateau supérieur par des procédés de dépôt sous vide.

L'invention a pour second objet une toiture comprenant un assemblage par recouvrement marginal d'au moins deux panneaux selon l'invention.

D'autres caractéristiques et avantages de l'invention apparaîtront à la lecture de la description qui va suivre.

L'invention sera mieux comprise à la lecture de la description qui suit, donnée à titre explicatif mais non limitatif, en référence aux figures annexées qui représentent :

- La figure 1 est une section transversale d'un panneau selon l'invention,
- La figure 2 est un détail de la figure 1,
- La figure 3 est une vue en perspective d'un panneau selon un premier mode de réalisation de l'invention,
- La figure 4 est une vue en perspective d'un panneau selon un second mode de réalisation de l'invention,

- La figure 5 est une vue en perspective d'un panneau selon un troisième mode de réalisation de l'invention.

Les mêmes numéros de référence représentent les mêmes éléments dans chacune des figures.

Dans l'ensemble du texte, on entendra par panneau un élément de forme plate, c'est-à-dire de faible épaisseur comparée à ses autres dimensions. Le panneau peut se présenter sous la forme d'une plaque ou d'une feuille constituée d'un matériau unique ou d'un assemblage composite. Dans ce dernier cas, le panneau est une superposition de plusieurs couches du même matériau ou de matériaux différents. Le matériau en question peut être, entre autre, un matériau métallique, un polymère ou encore une céramique. On pourra citer à titre d'exemple non limitatif de matériaux métalliques l'acier, l'aluminium, le cuivre, le zinc. De préférence le panneau est une tôle métallique. De préférence, il s'agit d'acier préalablement galvanisé et prélaqué afin de le protéger de la corrosion. Le panneau peut optionnellement être moussé.

Dans le cadre de l'invention, le panneau aura été préalablement mis en forme au moyen de tout procédé connu de mise en forme parmi lesquels on citera à titre d'exemple non limitatif le pliage, le profilage, l'emboutissage, le moulage.

Cette mise en forme conduit notamment à la formation de nervures à la surface du panneau. Dans l'ensemble du texte on entendra par nervure une saillie formée à la surface du panneau. La nervure peut être de forme trapézoïdale, comme dans le cas des exemples de réalisation présentés ci-après, ou de forme rectangulaire, ondulée, sinusoïdale ou encore en oméga, par exemple. Elle comprend une partie centrale supérieure et deux ailes latérales.

Pour former une toiture ou une façade, les panneaux sont assemblés par recouvrement marginal de leurs bords longitudinaux et de leurs bords transversaux et fixés à la structure porteuse du bâtiment par l'intermédiaire de moyens de fixation tels que des vis, des clous ou encore des rivets.

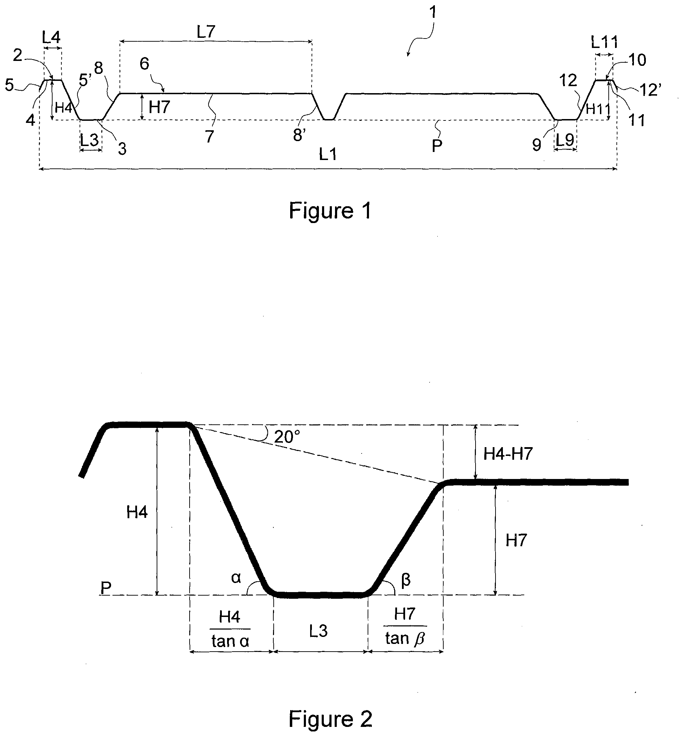

En référence à la figure 1, le panneau 1, présenté ici en coupe selon une coupe transversale, est principalement constitué d'un premier bord longitudinal, d'une partie saillante destinée à être recouverte de cellules photovoltaïques et d'un second bord longitudinal.

Tout d'abord, un premier bord longitudinal du panneau 1 comprend successivement une première nervure longitudinale 2 et une première semelle 3 de largeur L3 située dans un plan P. La nervure 2 est constituée d'une partie centrale supérieure 4 de hauteur H4 et de largeur L4 et de deux ailes latérales 5, 5' prolongeant la partie centrale 4 de part et d'autre de celle-ci et vers le dessous en formant un angle $\alpha$ avec le plan P. Par hauteur H4 il faut entendre ici la distance entre le plan P et le point le plus élevé de la partie centrale supérieure.

La nervure longitudinale a notamment pour fonction d'assurer la fixation du panneau à la structure du bâtiment en partie supérieure du profil du panneau et non en partie inférieure. Ceci permet d'éviter la stagnation d'eau au voisinage des fixations et donc d'éviter une éventuelle défaillance de l'étanchéité de la toiture.

Dans le cas de cet exemple, la partie centrale supérieure 4 est plane et les ailes latérales 5, 5' sont inclinées, s'étendant vers le dessous et vers l'extérieur de la partie centrale supérieure 4, l'angle $\alpha$ étant alors aigu. Dans le cadre de l'invention, la nervure longitudinale 2 peut bien sûr présenter d'autres formes que celle décrite dans le cas de cet exemple. L'aile latérale 5' de la nervure longitudinale 2 peut notamment être tronquée, comme dans le cas de la figure 1, ou non en fonction de la résistance mécanique souhaitée de cette partie du panneau.

Le panneau 1 comprend un second bord longitudinal comprenant une seconde semelle 9 de largeur L9 située dans le plan P et une deuxième nervure longitudinale 10 comprenant une partie centrale supérieure 11 de hauteur H11 et de largeur L11 et deux ailes latérales 12, 12' prolongeant la partie centrale supérieure de part et d'autre de celle-ci et vers le dessous en formant un angle $\gamma$ avec le plan P.

La deuxième nervure longitudinale a pour fonction d'être recouverte par la première nervure longitudinale du panneau adjacent lors de l'assemblage de deux panneaux. En conséquence, la hauteur H11 est inférieure ou égale à la hauteur H4 de la première nervure longitudinale. Les formes des première et deuxième nervures longitudinales sont ajustées en conséquence. De préférence, les formes sont ajustées de sorte que l'étanchéité à l'eau soit assurée en cas d'utilisation de panneau en toiture. De préférence, les deux nervures sont de forme et de dimensions identiques afin que le recouvrement soit parfaitement jointif et donc parfaitement étanche. Cependant, dans le cadre de l'invention, le recouvrement peut n'être que localement jointif. L'homme du métier qui connaît ces questions d'étanchéité saura adapter les formes des deux nervures longitudinales en fonction de l'esthétique recherché tout en s'assurant de l'étanchéité de l'assemblage.

Dans le prolongement de la première semelle 3 se trouve au moins une partie saillante 6 comprenant un plateau supérieur 7 de hauteur H7 et de largeur L7 et deux âmes latérales 8, 8' prolongeant le plateau supérieur de part et d'autre de celui-ci et vers le dessous en formant un angle $\beta$ avec le plan P. Par hauteur H7 il faut entendre ici la distance entre le plan P et l'extrémité latérale du plateau supérieur, autrement dit le point d'intersection du plateau supérieur et d'une âme latérale.

Le plateau 7 est destiné à être recouvert de cellules photovoltaïques. Il peut s'agir par exemple de modules sous forme de rubans souples collés sur la surface du plateau supérieur 7 ou de dispositifs photovoltaïques réalisés directement sur la surface du plateau 7 par des procédés de dépôt sous vide ou à pression atmosphérique. A cet effet, et de sorte à obtenir un taux de couverture photovoltaïque significatif, le plateau 7 est de grande dimension comparativement à la partie centrale supérieure 4, 11 des nervures longitudinales et occupe une part significative du panneau.

Ainsi, dans le cadre de l'invention :

- le rapport de la largeur L7 du plateau supérieur 7 sur la largeur L4 de la partie centrale supérieure 4 est supérieur ou égal à 5,
- le rapport de la largeur L7 du plateau supérieur 7 sur la largeur L11 de la partie centrale supérieure 11 est supérieur ou égal à 5.

De préférence, et toujours dans un souci d'obtenir un panneau largement recouvert de cellules photovoltaïques, le rapport de la somme des largeurs L7 des parties saillantes 6, 6' sur la largeur L1 du panneau est supérieur ou égal à 0,5.

Par ailleurs, la hauteur du plateau supérieur, la hauteur des parties centrales supérieures, la largeur des semelles et les angles $\alpha$, $\beta$ et $\gamma$ sont configurés de sorte qu'aucune portion des cellules photovoltaïques recouvrant le plateau supérieur ne puisse se retrouver à l'ombre des première et deuxième nervures longitudinales quand les rayons du soleil font un angle supérieur ou égal à 20° avec le plan P. A cet effet, dans le cadre de l'invention :

-
$$H7/H4 \geq 0{,}4 \qquad\qquad (1)$$

-
$$H7 \geq ((H4 \times (ab\text{-}be) - L3 \times abe) / (ae + ab)) \qquad\qquad (2)$$

- et

$$H7 \geq ((H11 \times (cb\text{-}be) - L9 \times cbe) / (ce + cb)) \qquad\qquad (3)$$

avec a = tan $\alpha$, b = tan $\beta$, c = tan $\gamma$ et e = tan 20°

les inéquations (2) et (3) résultant de l'expression de la tangente de l'angle de 20° tel que représenté à la figure 2.

L'angle de 20° correspond à la limite acceptable en terme de pertes énergétiques dues à l'ombrage ; ces pertes ne représentent alors qu'un faible pourcentage de l'énergie reçue par les cellules photovoltaïques.

Pour un ratio H7 / H4 inférieur à 0,4, le respect des inéquations (2) et (3) nécessite de recourir à des semelles 3 et 9 de grande largeur, ce qui s'avère être peu compatible avec le souci d'obtenir un panneau largement recouvert de cellules photovoltaïques.

Selon l'invention, le ratio H7 / H4 est inférieur ou égal à 0,6 de sorte que la majeure partie du plateau supérieur ne dépasse pas au-dessus de la partie centrale supérieure de la nervure même lorsque le plateau supérieur est cintré, comme décrit ultérieurement. Ainsi l'étanchéité de la toiture est mieux préservée, l'eau s'écoulant du plateau supérieur ne pouvant atteindre les bords longitudinaux du panneau, au niveau du recouvrement marginal entre deux panneaux.

De préférence, les inéquations (2) et (3) sont satisfaites pour e = tan 15°, et plus préférentiellement encore pour e = tan 10°. Ainsi les cellules photovoltaïques recouvrant le plateau supérieur ne se retrouvent pas à l'ombre des première et deuxième nervures longitudinales quand les rayons du soleil sont particulièrement rasants.

De façon plus préférentielle encore, les cellules photovoltaïques recouvrant le plateau supérieur ne se retrouvent jamais à l'ombre des première et deuxième nervures longitudinales quelque soit l'incidence des rayons du soleil. Cette condition est satisfaite lorsque la hauteur H7 du plateau supérieur 7 est supérieure ou égale à la hauteur H4 de la partie centrale supérieure 4 et est supérieure ou égale à la hauteur H11 de la partie centrale supérieure 11. Autrement dit, cette condition est satisfaite lorsque les inéquations (1) à (3) sont remplacées par les inéquations suivantes :

-
$$H7 \geq H4 \qquad\qquad (4)$$

- et

$$H7 \geq H11 \qquad\qquad (5)$$

De façon plus préférentielle encore, la hauteur H7 du plateau supérieur 7 est strictement supérieure à la hauteur H4 de la partie centrale supérieure 4 et est strictement supérieure à la hauteur H11 de la partie centrale supérieure 11. Autrement dit, cette condition est satisfaite lorsque les inéquations (1) à (3) sont remplacées par les inéquations suivantes :

- 

$$H7 > H4 \qquad\qquad (6)$$

- et

$$H7 > H11 \qquad\qquad (7)$$

Ainsi, non seulement les cellules photovoltaïques recouvrant le plateau supérieur ne se retrouvent jamais à l'ombre des première et deuxième nervures longitudinales quelque soit l'incidence des rayons du soleil, mais de plus une telle configuration permet d'envisager l'ajout de cellules photovoltaïques dans la partie supérieure des âmes latérales 8, 8' de la partie saillante 6, autrement dit dans la partie des âmes latérales qui ne se retrouve jamais dans l'ombre des nervures longitudinales. Ceci permet d'augmenter le taux de couverture photovoltaïque du panneau. Par ailleurs, le nettoyage des cellules photovoltaïques s'en trouve facilité, les nervures longitudinales ne faisant pas obstacle entre les cellules photovoltaïques de deux plateaux adjacents.

De préférence, et toujours dans un souci d'éviter les ombres portées sur les cellules photovoltaïques, le plateau est plan et horizontal comme illustré à la figure 1. On est ainsi assuré qu'aucune portion du plateau ne fera d'ombre à une autre portion du plateau. Cependant, dans le cadre de l'invention, le plateau peut n'être qu'approximativement plan, autrement dit légèrement concave ou légèrement convexe. Par « légèrement concave » et « légèrement convexe » on entend ici que le cintrage du plateau est tel qu'aucune portion du plateau ne fait d'ombre à une autre portion du plateau quand les rayons du soleil font un angle supérieur ou égal à 20° avec le plan P. Ceci correspond à un rayon de courbure du plateau supérieur ou égal à 1,4 fois la largeur L7 du plateau supérieur, soit par exemple un rayon de courbure de 400mm pour une largeur L7 de l'ordre de 275mm. Ce cintrage du plateau permet de renforcer la résistance mécanique de la partie saillante. Le plateau supérieur est rigidifié et ne s'affaisse ainsi pas en cas de charge.

Le plateau supérieur 7 peut par ailleurs comporter une ou des rainures longitudinales orientées vers le bas et destinées à permettre le passage des câbles en sous-face des cellules photovoltaïques. Ces rainures peuvent éventuellement être combinées à un ou des emboutis dans la surface du plateau supérieur destinés à loger, entre le plateau et les cellules photovoltaïques, le boitier de raccordement électrique du module photovoltaïque.

L'orientation des ailes latérales 8,8' peut également permettre d'accroitre le taux de couverture photovoltaïque. Dans le cas de la figure 1, les ailes latérales 8, 8' sont inclinées, s'étendant vers le dessous et vers l'extérieur du plateau supérieur 7. Cependant d'autres configurations sont possibles ; les ailes latérales 8, 8' peuvent par exemple s'étendre vers le dessous et vers l'intérieur du plateau supérieur 7, l'angle $\beta$ étant obtus, de sorte à minimiser la distance existant entre l'extrémité longitudinale du plateau supérieur 7 et l'extrémité longitudinale de la partie centrale supérieure 4 et ainsi maximiser la surface disponible pour les cellules photovoltaïques.

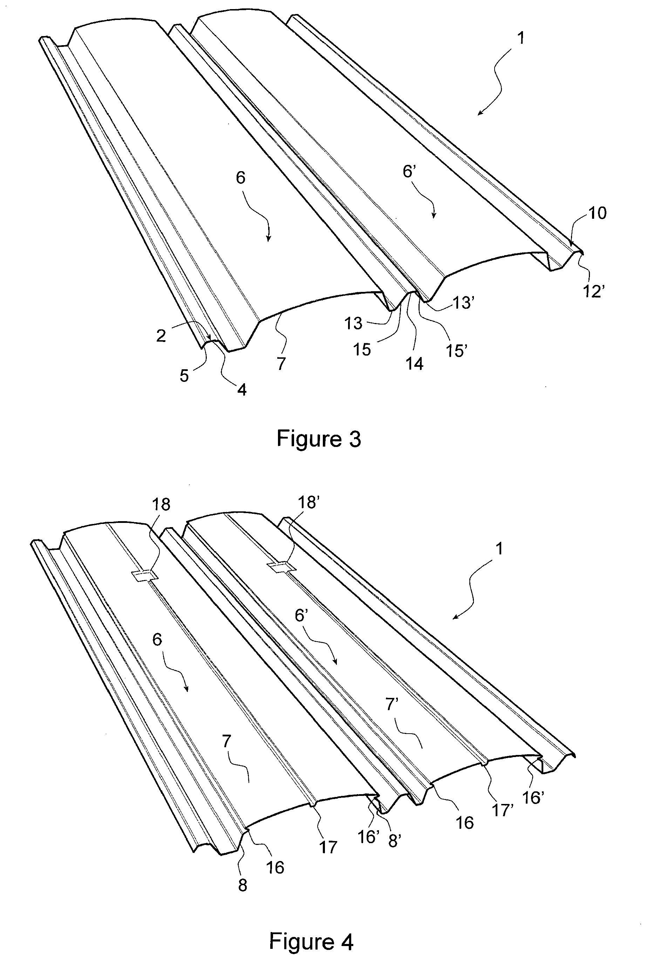

Un premier mode de réalisation de l'invention est décrit en référence à la figure 3.

Le panneau 1 comprend dans ce cas un premier bord longitudinal, deux parties saillantes 6, 6' successives et un second bord longitudinal.

Les deux nervures longitudinales 2, 10 sont de forme identique trapézoïdale, les ailes latérales s'étendant vers le dessous et vers l'extérieur et les ailes latérales 5, 12' étant tronquées. Le recouvrement des deux nervures longitudinal se fait ainsi de façon parfaitement jointive, ce qui contribue à l'étanchéité de la toiture.

Les parties saillantes présentent des plateaux supérieurs légèrement concaves avec un rayon de courbure du plateau environ égal à 1,8 fois la largeur L7 du plateau supérieur.

La hauteur H7 des plateaux supérieurs est supérieure à la hauteur H4 des parties centrales supérieure, ce qui évite tout ombrage des nervures longitudinales sur les plateaux.

Les deux parties saillantes 6, 6' sont séparées par deux semelles 13, 13' de longueur L13 situées dans le plan P encadrant une nervure centrale comprenant une partie centrale supérieure 14 de hauteur H14 et deux ailes latérales 15, 15' prolongeant la partie centrale supérieure de part et d'autre de celle-ci vers le dessous et vers l'extérieur en formant un angle $\delta$ avec le plan P. Cette nervure centrale permet d'une part d'accroître la résistance mécanique du panneau et d'autre part de fixer le centre du panneau à la structure porteuse du bâtiment, les semelles 13, 13' constituant des points d'appui du panneau sur cette structure. Les semelles et la nervure centrale sont configurées de sorte que les cellules photovoltaïques recouvrant le plateau supérieur ne puissent se retrouver à l'ombre de la nervure centrale quand les rayons du soleil font un angle supérieur ou égal à 20° avec le plan P. A cet effet, la largeur L13, les hauteurs H7, H14 et les angles $\beta$ et $\delta$ respectent la relation suivante :

$$H7 \geq ((H14 \times (db\text{-}be) - L13 \times dbe) / (de + db)) \qquad\qquad (6)$$

Avec b = tan β, d = tan δ et e = tan 20°

Selon une variante, le ratio H7 / H14 est supérieur à 0,4, ce qui évite de recourir à des semelles 13 de trop grande largeur.

Selon une variante, le ratio H7 / H14 est inférieur ou égal à 0,6 de sorte que la majeure partie du plateau supérieur ne dépasse pas au-dessus de la partie centrale supérieure de la nervure même lorsque le plateau supérieur est cintré. Ainsi l'étanchéité de la toiture est mieux préservée, l'eau s'écoulant du plateau supérieur ne pouvant atteindre la partie centrale supérieure 14 où sont situés les moyens de fixation du panneau à la structure porteuse du bâtiment.

De préférence, l'inéquation (6) est satisfaite pour e = tan 15°, et plus préférentiellement encore pour e = tan 10°. Ainsi les cellules photovoltaïques recouvrant le plateau supérieur ne se retrouvent pas à l'ombre de la nervure centrale quand les rayons du soleil sont particulièrement rasants.

De façon plus préférentielle encore, les cellules photovoltaïques recouvrant le plateau supérieur ne se retrouvent jamais à l'ombre de la nervure centrale quelque soit l'incidence des rayons du soleil. Cette condition est satisfaite lorsque l'inéquation (6) est exprimée de la façon suivante :

$$H7 \geq H14$$

De façon plus préférentielle encore, la hauteur H7 du plateau supérieur 7 est strictement supérieure à la hauteur H14 de la partie centrale supérieure 14. Ainsi, non seulement les cellules photovoltaïques recouvrant le plateau supérieur ne se retrouvent jamais à l'ombre de la nervure centrale quelque soit l'incidence des rayons du soleil, mais de plus une telle configuration permet d'envisager l'ajout de cellules photovoltaïques dans la partie supérieure des âmes latérales 8, 8' de la partie saillante 6, autrement dit dans la partie des âmes latérales qui ne se retrouve jamais dans l'ombre de la nervure centrale. Ceci permet d'augmenter le taux de couverture photovoltaïque du panneau. Par ailleurs, le nettoyage des cellules photovoltaïques s'en trouve facilité, la nervure centrale ne faisant pas obstacle entre les cellules photovoltaïques de deux plateaux adjacents.

Dans le cas de cet exemple, la partie centrale supérieure 14 de la nervure centrale est de même hauteur que la partie centrale supérieure 4 de la première nervure longitudinale.

Un second mode de réalisation de l'invention est décrit en référence à la figure 4.

Le panneau 1 de la figure 4 reprend les caractéristiques du premier mode de réalisation illustré à la figure 3. A cela s'ajoute les caractéristiques décrites ci-dessous.

Les âmes latérales 8, 8' des parties saillantes 6, 6' comprennent un raidisseur 16, 16' en forme de Z en partie supérieure d'âme au voisinage du plateau supérieur. Ce raidisseur permet d'une part de renforcer la résistance mécanique de la partie saillante et d'autre part d'assurer la fixation de modules photovoltaïques par clippage de leurs extrémités longitudinales sur les raidisseurs 16, 16'.

Les plateaux supérieurs 7, 7' comportent par ailleurs un passage de câble 17, 17' sous forme d'une rainure longitudinale, orientée vers le bas, située approximativement au centre du plateau supérieur et destinée à faciliter le passage des câbles en sous-face des cellules photovoltaïques. Ce passage de câble est complété d'un embouti 18, 18' dans la surface du plateau supérieur destiné à loger entre le plateau et les cellules photovoltaïques le boitier de raccordement électrique du module photovoltaïque.

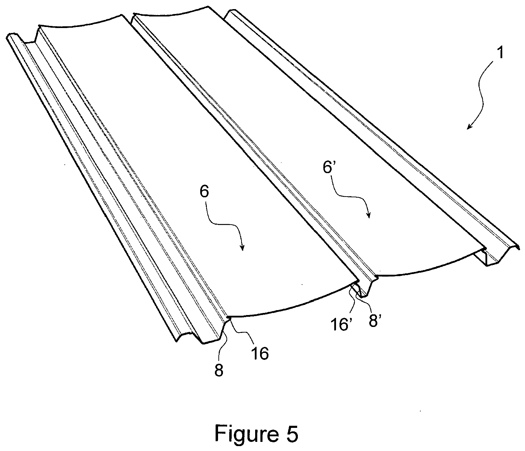

Un troisième mode de réalisation de l'invention est décrit en référence à la figure 5.

Le panneau 1 comprend dans ce cas un premier bord longitudinal, deux parties saillantes 6, 6' successives et un second bord longitudinal.

Les deux bords longitudinaux reprennent les caractéristiques de ceux du premier mode de réalisation illustré à la figure 3.

Les deux parties saillantes 6, 6' sont séparées par une semelle. Chacune d'elles présente un plateau supérieur légèrement convexe avec un rayon de courbure du plateau environ égal à 1,8 fois la largeur L7 du plateau supérieur. Cette légère convexité facilite l'écoulement des eaux de pluie.

Les âmes latérales 8, 8' des parties saillantes 6, 6' comprennent un raidisseur 16, 16' comme illustré à la figure 4.

La hauteur H7 des plateaux supérieurs est supérieure à la hauteur H4 des parties centrales supérieure, ce qui évite tout ombrage des nervures longitudinales sur les plateaux.

## Revendications

**1.** Panneau (1) présentant un profil de largeur L1 comprenant :

- un premier bord longitudinal comprenant successivement une première nervure longitudinale (2) comprenant une partie centrale supérieure (4) de hauteur H4 et de largeur L4 et deux ailes latérales (5, 5') prolongeant la partie centrale supérieure de part et d'autre de celle-ci et vers le dessous puis une première semelle (3) de largeur L3 située dans un plan P, les deux ailes latérales formant un angle $\alpha$ avec le plan P,
- au moins une partie saillante (6, 6') dans le prolongement de la première semelle et comprenant un plateau supérieur (7) de hauteur H7 et de largeur L7 et deux âmes latérales (8, 8') prolongeant le plateau supérieur de part et d'autre de celui-ci et vers le dessous en formant un angle $\beta$ avec le plan P,
- un second bord longitudinal dans le prolongement d'une des parties saillantes (6, 6') comprenant successivement une seconde semelle (9) de largeur L9 située dans le plan P et une deuxième nervure longitudinale (10) comprenant une partie centrale supérieure (11) de hauteur H11 et de largeur L11 et deux ailes latérales (12, 12') prolongeant la partie centrale supérieure de part et d'autre de celle-ci et vers le dessous en formant un angle $\gamma$ avec le plan P, la première nervure longitudinale (2) et la deuxième nervure longitudinale (10) présentant des formes permettant leur recouvrement respectif, ledit panneau étant **caractérisé en ce que** les largeurs L1, L3, L4, L7, L9, L11, les hauteurs H4, H7, H11 et les angles $\alpha$, $\beta$, $\gamma$ respectent les relations suivantes :

$$L7 / L4 \geq 5$$

$$L7 / L11 \geq 5$$

$$0,4 \leq H7 / H4 \leq 0,6$$

$$H7 \geq ((H4 \times (ab-be) - L3 \times abe) / (ae + ab))$$

$$H7 \geq ((H11 \times (cb-be) - L9 \times cbe) / (ce + cb))$$

Avec a = tan $\alpha$, b = tan $\beta$, c = tan $\gamma$ et e = tan 20°.

2. Panneau selon la revendication 1 pour lequel le rapport de la somme des largeurs L7 des parties saillantes (6, 6') sur la largeur L1 du panneau est supérieur ou égal à 0,5.

3. Panneau selon l'une des revendications précédentes pour lequel les relations sont respectées avec e = tan 15°.

4. Panneau selon l'une des revendications 1 à 2 pour lequel les largeurs L4, L7, L9, L11 et les hauteurs H4, H7, H11 respectent les relations suivantes :

$$L7 / L4 \geq 5$$

$$L7 / L11 \geq 5$$

$$H7 > H4$$

$$H7 > H11$$

5. Panneau selon l'une des revendications précédentes comprenant deux parties saillantes (6, 6').

6. Panneau selon la revendication 5 pour lequel les deux parties saillantes (6, 6') sont séparés par deux semelles (13, 13') de longueur L13 situées dans le plan P encadrant une nervure centrale comprenant une partie centrale supérieure (14) de hauteur H 4 et deux ailes latérales (15, 15') prolongeant la partie centrale supérieure de part et d'autre de celle-ci et vers le dessous en formant un angle $\delta$ avec le plan P, la largeur L13, les hauteurs H7, H14 et les angles $\beta$ et $\delta$ respectant la relation suivante :

$$H7 \geq ((H14 \times (db\text{-}be) - L13 \times dbe) / (de + db))$$

Avec d= tan $\delta$.

7. Panneau selon la revendication 6 pour lequel le ratio H7 / H14 est inférieur ou égal à 0,6.

8. Panneau selon la revendication 6 pour lequel les hauteurs H7 et H14 respectent la relation suivante :

$$H7 > H14$$

9. Panneau selon l'une des revendications précédentes pour lequel la partie centrale supérieure (4) est plane.

10. Panneau selon l'une des revendications 1 à 8 pour lequel le plateau supérieur (7) est cintré avec un rayon de courbure supérieur ou égal à 1,4 fois la largeur L7 du plateau supérieur.

11. Panneau selon la revendication 10 pour lequel le plateau supérieur (7) est concave.

12. Panneau selon la revendication 10 pour lequel le plateau supérieur (7) est convexe.

13. Panneau selon l'une des revendications précédentes pour lequel l'âme latérale (8, 8') de la partie saillante (6, 6') comprend un raidisseur (16, 16') en forme de Z en partie supérieure d'âme.

14. Panneau selon l'une des revendications précédentes pour lequel le plateau supérieur (7, 7') comprend une rainure longitudinale (17, 17') destinée à permettre le passage de câbles.

15. Panneau selon l'une des revendications précédentes comprenant un embouti (18, 18') dans la surface du plateau supérieur (7, 7') destiné à loger un boîtier de raccordement électrique.

16. Panneau selon l'une des revendications précédentes pour lequel les angles $\alpha$, $\beta$ et y sont aigus.

17. Panneau selon l'une des revendications 1 à 15 pour lequel les angles a et $\gamma$ sont aigus et l'angle $\beta$ est obtus.

18. Panneau selon l'une des revendications précédentes pour lequel le plateau supérieur (7, 7') est recouvert de cellules photovoltaïques.

19. Panneau selon la revendication 18 pour lequel les cellules photovoltaïques sont assemblées sous forme de rubans souples collés sur le plateau supérieur (7, 7').

20. Panneau selon la revendication 18 pour lequel les cellules photovoltaïques sont réalisées directement sur le plateau supérieur (7, 7') par des procédés de dépôt sous vide.

21. Toiture comprenant un assemblage par recouvrement marginal d'au moins deux panneaux selon l'une quelconque des revendications précédentes.

**Patentansprüche**

1. Platte (1), die ein Profil der Breite L1 hat, aufweisend:

- einen ersten Längsrand, der sukzessive aufweist eine erste Längsrippe (2), die einen zentralen oberen Abschnitt (4) der Höhe H4 und der Breite L4 und zwei seitliche Flügel (5, 5') aufweist, die den zentralen oberen Abschnitt beidseits desselben nach unten hin verlängern, dann eine erste Sohle (3) der Breite L3, die in einer Ebene P angeordnet ist, wobei die beiden seitlichen Flügel einen Winkel $\alpha$ mit der Ebene P bilden,
- wenigstens einen vorstehenden Abschnitt (6, 6') in der Verlängerung der ersten Sohle und der aufweist ein oberes Plateau (7) der Höhe H7 und der Breite L7 und zwei seitliche Flügel (8, 8'), die das obere Plateau beidseits desselben nach unten hin verlängern unter Ausbildung eines Winkels β mit der Ebene P,
- einen zweiten Längsrand in der Verlängerung von einem der vorstehenden Abschnitte (6, 6') und der sukzessive aufweist eine zweite Sohle (9) der Breite L9, die in der Ebene P angeordnet sind, und eine zweite Längsrippe (10), die einen zentralen oberen Abschnitt (11) der Höhe H11 und der Breite L11 und zwei seitliche Flügel (12, 12') aufweist, die den zentralen oberen Abschnitt beidseits desselben nach unten hin verlängern unter Ausbildung eines Winkels γ mit der Ebene P, wobei die erste Längsrippe (2) und die zweite Längsrippe (10) Formen haben, die ihre jeweilige Abdeckung ermöglichen, wobei die besagte Platte (1) **dadurch gekennzeichnet ist, dass** die Breiten L1, L3, L4, L7, L9, L11, die Höhen H4, H7, H11 und die Winkel α, β, γ die nachfolgenden Beziehungen einhalten:

$$L7/L4 \geq 5$$

$$L7/L11 \geq 5$$

$$0{,}4 \leq H7/H4 \leq 0{,}6$$

$$H7 \geq ((H4 \times (ab-be) - L3 \times abe)/(ae + ab))$$

$$H7 \geq ((H11 \times (cb-be) - L9 \times cbe)/(ce + cb))$$

mit a = tan α, b = tan β, c = tan γ und e = tan 20°.

2. Platte gemäß Anspruch 1, wobei das Verhältnis der Summe der Breiten L7 der vorstehenden Abschnitte (6, 6') zu der Breite L1 der Platte größer oder gleich 0,5 ist.

3. Platte gemäß einem der vorhergehenden Ansprüche, wobei die Beziehungen eingehalten werden mit e = tan 15°.

4. Platte gemäß einem der Ansprüche 1 bis 2, wobei die Breiten L4, L7, L11 und die Höhen H4, H7, H11 die nachfolgenden Beziehungen einhalten:

$$L7/L4 \geq 5$$

$$L7/L11 \geq 5$$

$$H7 > H4$$

$$H7 > H11$$

5. Platte gemäß einem der vorhergehenden Ansprüche, aufweisend zwei vorstehende Abschnitte (6, 6').

6. Platte gemäß Anspruch 5, wobei die beiden vorstehenden Abschnitte (6, 6') von zwei Sohlen (13, 13') der Länge L13 separiert sind, die in der Ebene P angeordnet sind und eine zentrale Rippe einrahmen, die einen zentralen oberen Abschnitt (14) der Höhe H14 und zwei seitliche Flügel (15, 15') aufweist, die den zentralen oberen Abschnitt beidseits desselben nach unten hin verlängern unter Ausbildung eines Winkels δ mit der Ebene P, wobei die Breite L13, die Höhen H7, H14 und die Winkel β und δ jeweils die nachfolgende Beziehung einhalten:

$$H7 \geq ((H14 \times (db-be) - L13 \times dbe)/(de + db)$$

mit d = tan $\delta$.

7.  Platte gemäß Anspruch 6, wobei das Verhältnis H7/H14 kleiner oder gleich 0,6 ist.

8.  Platte gemäß Anspruch 6, wobei die Höhen H7 und H14 jeweils die nachfolgende Beziehung einhalten:

$$H7 > H14$$

9.  Platte gemäß einem der vorhergehenden Ansprüche, wobei der zentrale obere Abschnitt (4) eben ist.

10. Platte gemäß einem der Ansprüche 1 bis 8, wobei die obere Platte (7) gebogen ist mit einem Krümmungsradius von größer oder gleich dem 1,4-fachen der Breite L7 der oberen Platte.

11. Platte gemäß Anspruch 10, wobei die obere Platte (7) konkav ist.

12. Platte gemäß Anspruch 10, wobei die obere Platte (7) konvex ist.

13. Platte gemäß einem der vorhergehenden Ansprüche, wobei der seitliche Steg (8, 8') des vorstehenden Abschnitts (6, 6') eine Aussteifung (16, 16') der Form eines Z im oberen Stegabschnitt aufweist.

14. Platte gemäß einem der vorhergehenden Ansprüche, wobei die obere Platte (7, 7') eine Längsrinne (17, 17') aufweist, die dazu bestimmt ist, die Passage von Kabeln zu ermöglichen.

15. Platte gemäß irgendeinem der vorhergehenden Ansprüche, aufweisend eine Vertiefung (18, 18') in der Fläche der oberen Platte (7, 7'), die dazu bestimmt ist, ein Gehäuse zur elektrischen Verbindung aufzunehmen.

16. Platte gemäß einem der vorhergehenden Ansprüche, wobei die Winkel $\alpha$, $\beta$, $\gamma$ spitz sind.

17. Platte gemäß einem der Ansprüche 1 bis 15, wobei die Winkel $\alpha$ und $\gamma$ spitz sind und der Winkel $\beta$ stumpf ist.

18. Platte gemäß einem der vorhergehenden Ansprüche, wobei die obere Platte (7, 7') mit fotoelektrischen Zellen bedeckt ist.

19. Platte gemäß Anspruch 18, wobei die fotoelektrischen Zellen in der Form flexibler Bänder zusammengebaut sind, die auf die obere Platte (7, 7') geklebt sind.

20. Platte gemäß Anspruch 18, wobei die fotoelektrischen Zellen direkt auf der oberen Platte (7, 7') realisiert sind durch Abscheideprozesse unter Vakuum.

21. Dach, aufweisend einen Zusammenbau durch Außenbedeckung wenigstens zweier Platten gemäß irgendeinem der vorhergehenden Ansprüche.

**Claims**

1.  Panel (1) having a profile of width L1, comprising:

    - a first longitudinal edge comprising, in succession, a first longitudinal rib (2) comprising an upper central portion (4) of height H4 and width L4 and two lateral wings (5, 5') which prolong the upper central portion on either side thereof and downwards, and then a first base portion (3) of width L3 which is situated in a plane P, the two lateral wings forming an angle $\alpha$ with the plane P,
    - at least one protruding portion (6, 6') as a continuation of the first base portion and comprising an upper plateau (7) of height H7 and width L7 and two lateral web portions (8, 8') which prolong the upper plateau on either side thereof and downwards, forming an angle $\beta$ with the plane P,
    - a second longitudinal edge as a continuation of one of the protruding portions (6, 6'), comprising, in succession, a second base portion (9) of width L9 which is situated in the plane P and a second longitudinal rib (10) comprising an upper central portion (11) of height H11 and width L11 and two lateral wings (12, 12') which prolong the upper central portion on either side thereof and downwards, forming an angle $\gamma$ with the plane P, the first longitudinal rib (2) and the second longitudinal rib (10) having shapes which allow them to mutually overlap,

said panel (1) being **characterised in that**
the widths L1, L3, L4, L7, L9, L11, the heights H4, H7, H11 and the angles $\alpha$, $\beta$, $\gamma$ comply with the following relationships:

$$L7 / L4 \geq 5$$

$$L7 / L11 \geq 5$$

$$0.4 \leq H7 / H4 \leq 0.6$$

$$H7 \geq ((H4 \times (ab\text{-}be) - L3 \times abe) / (ae + ab))$$

$$H7 \geq ((H11 \times (cb\text{-}be) - L9 \times cbe) / (ce + cb))$$

where $a = \tan \alpha$, $b = \tan \beta$, $c = \tan \gamma$ and $e = \tan 20°$.

2. Panel according to claim 1, wherein the ratio of the sum of the widths L7 of the protruding portions (6, 6') to the width L1 of the panel is greater than or equal to 0.5.

3. Panel according to any one of the preceding claims, wherein the relationships are complied with when $e = \tan 15°$.

4. Panel according to either claim 1 or claim 2, wherein the widths L4, L7, L11 and the heights H4, H7, H11 comply with the following relationships:

$$L7 / L4 \geq 5$$

$$L7 / L11 \geq 5$$

$$H7 > H4$$

$$H7 > H11.$$

5. Panel according to any one of the preceding claims, comprising two protruding portions (6, 6').

6. Panel according to claim 5, wherein the two protruding portions (6, 6') are separated by two base portions (13, 13') of length L13 which are situated in the plane P surrounding a central rib comprising an upper central portion (14) of height H14 and two lateral wings (15, 15') which prolong the upper central portion on either side thereof and downwards, forming an angle $\delta$ with the plane P, the width L13, the heights H7, H14 and the angles $\beta$ and $\delta$ complying with the following relationship:

$$H7 \geq ((H14 \times (db\text{-}be) - L13 \times dbe) / (de + db))$$

where $d = \tan \delta$.

7. Panel according to claim 6, wherein the ratio H7 / H14 is less than or equal to 0.6.

8. Panel according to claim 6, wherein the heights H7 and H14 comply with the following relationship:

$$H7 > H14.$$

9. Panel according to any one of the preceding claims, wherein the upper central portion (4) is flat.

10. Panel according to any one of claims 1 to 8, wherein the upper plateau (7) is curved with a radius of curvature greater than or equal to 1.4 times the width L7 of the upper plateau.

11. Panel according to claim 10, wherein the upper plateau (7) is concave.

12. Panel according to claim 10, wherein the upper plateau (7) is convex.

13. Panel according to any one of the preceding claims, wherein the lateral web portion (8, 8') of the protruding portion (6, 6') comprises a Z-shaped stiffener (16, 16') in the upper part of the web portion.

14. Panel according to any one of the preceding claims, wherein the upper plateau (7, 7') comprises a longitudinal groove (17, 17') which is to permit the passage of cables.

15. Panel according to any one of the preceding claims, comprising a recess (18, 18') in the surface of the upper plateau (7, 7'), which recess is to house an electrical junction box.

16. Panel according to any one of the preceding claims, wherein the angles $\alpha$, $\beta$ and $\gamma$ are acute.

17. Panel according to any one of claims 1 to 15, wherein the angles $\alpha$ and $\gamma$ are acute and the angle $\beta$ is obtuse.

18. Panel according to any one of the preceding claims, wherein the upper plateau (7, 7') is covered with photovoltaic cells.

19. Panel according to claim 18, wherein the photovoltaic cells are assembled in the form of flexible strips which are adhesively bonded to the upper plateau (7, 7').

20. Panel according to claim 18, wherein the photovoltaic cells are produced directly on the upper plateau (7, 7') by vacuum deposition methods.

21. Roofing comprising an assembly by marginal overlapping of at least two panels according to any one of the preceding claims.

Figure 1

Figure 2

Figure 3

Figure 4

Figure 5

**EP 3 074 578 B1**

**Documents brevets cités dans la description**

- FR 2951529